# EUROPÄISCHE PATENTSCHRIFT

(11) **EP 3 327 278 B1**
(45) Veröffentlichungstag und Bekanntmachung des Hinweises auf die Patenterteilung: **14.10.2020**
(21) Anmeldenummer: 17203546.1
(22) Anmeldetag: 24.11.2017
(51) Int. Cl.: F02M 55/00

(54) **INJEKTORAUFNAHME UND VERBINDUNGSANORDNUNG EINES KRAFTSTOFFEINSPRITZSYSTEMS**
INJECTOR RECEIVER AND CONNECTION ASSEMBLY OF A FUEL INJECTION SYSTEM
PRISE D'INJECTEUR ET ENSEMBLE DE RACCORDEMENT D'UN SYSTÈME D'INJECTION DE CARBURANT

(30) Priorität: 25.11.2016 DE 102016122817
(43) Veröffentlichungstag der Anmeldung: 30.05.2018
(73) Patentinhaber: Benteler Automobiltechnik GmbH, 33102 Paderborn (DE)
(72) Erfinder: Kwast, Thorsten, 32049 Herford (DE)
(74) Vertreter: Ksoll, Peter

(56) Entgegenhaltungen:
- EP-A1- 1 967 728
- EP-A1- 2 910 768
- EP-A2- 2 317 118

## Beschreibung

Die Erfindung betrifft eine Injektoraufnahme und eine Verbindungsanordnung eines Kraftstoffeinspritzsystems mit einer solchen Injektoraufnahme.

Die Erfindung liegt auf dem Gebiet der Kraftstoffversorgung von Verbrennungsmotoren mit einem Kraftstoffeinspritzsystem. Hierbei wird statisch komprimierter Kraftstoff in einem Verteilerrohr gespeichert und verteilt den Injektoren bzw. Einspritzventilen einer Zylinderbank zur Verfügung gestellt.

Zum technologischen Hintergrund zählt die DE 103 33 721 B4. Diese offenbart ein Kraftstoffverteilerrohr mit mindestens einer Injektoraufnahme in Form eines Anschlussstücks für einen Injektor. Das Verteilerrohr und das Anschlussstück sind fluidleitend verbunden. Zur genauen Positionierung des Verteilerrohres und des Anschlussstückes im Fügeprozess ist eine Hülse im Verbindungsbereich vorgesehen. Am Anschlussstück umfangsseitig der Hülse ist ein Spalt vorgesehen, in den ein Lotring eingelegt ist und das Verteilerrohr mit dem Anschlussstück durch Löten verbunden.

Durch die EP 1 967 728 B1 zählt eine Kupplungsvorrichtung zum hydraulischen Kuppeln eines Kraftstoff-Injektors an ein Kraftstoff-Verteilerrohr eines Verbrennungsmotors zum Stand der Technik. Die Kupplungsvorrichtung umfasst eine Injektoraufnahme, die ausgelegt ist, um mit einem Kraftstoff-Einlassabschnitt des Kraftstoff-Injektors in Eingriff zu stehen und ein Rohr bzw. eine Rohrleitung mit einem ersten Ende und einem zweiten Ende, wobei das erste Ende an das Kraftstoff-Verteilerrohr und das zweite Ende an die Injektoraufnahme gekuppelt werden kann (siehe hierzu Figuren 2 und 3 der EP 1 967 728 B1). Das zweite Ende der Rohrleitung ist an die Injektoraufnahme gelötet oder geschweißt.

Aus der EP 2 910 768 A1 geht eine Injektoraufnahme hervor, welche einen Injektorstutzen zur Aufnahme eines Einlassabschnitts eines Kraftstoffinjektors und einen Anschlussstutzen zur Aufnahme eines Anschlussendes einer Rohrleitung aufweist.

Des Weiteren offenbart die EP 2 317 118 A2 einen Kraftstoffverteiler. Dort sind Abzweigleitungen über jeweils einen Anschlussadapter an ein Verteilerrohr angeschlossen. Hierzu ist ein Endabschnitt einer Abzweigleitung in einen radial zum Verteilerrohr ausgerichteten Stutzen des Anschlussadapters eingeführt und mit dem Stutzen gefügt. Am Innenumfang des Stutzens ist ein Endanschlag zur Lagepositionierung des Endabschnitts der Abzweigleitung ausgebildet.

Der Erfindung liegt ausgehend vom Stand der Technik die Aufgabe zugrunde, eine rationell herstellbare und bauteiltechnisch sowie qualitativ verbesserte Injektoraufnahme zu schaffen und eine für den betrieblichen Einsatz in einem Kraftstoffeinspritzsystem verbesserte Verbindungsanordnung mit einer solchen Injektoraufnahme aufzuzeigen.

Die Lösung des die Injektoraufnahme betreffenden Teils der Aufgabe zeigt Anspruch 1 auf.

Die erfindungsgemäße Verbindungsanordnung ist in Anspruch 8 charakterisiert.

Vorteilhafte Ausgestaltungen und Weiterbildungen der erfindungsgemäßen Injektoraufnahme sind Gegenstand der abhängigen Ansprüche 2 bis 7.

Die Erfindung betrifft eine Injektoraufnahme und eine Verbindungsanordnung eines Kraftstoffeinspritzsystems mit einer solchen Injektoraufnahme. Die Injektoraufnahme ist bevorzugt ein Tiefziehteil. Die Injektoraufnahme ist durch Zugdruckumformung eines Blechzuschnitts, insbesondere aus einem Stahlblech, vorzugsweise aus Edelstahl, hergestellt. Die Injektoraufnahme weist einen Injektorstutzen zur Aufnahme eines Einlassabschnitts eines Kraftstoffinjektors und einen Anschlussstutzen zur Aufnahme eines Anschlussendes einer Rohrleitung auf. Der Injektorstutzen ist geometrisch, insbesondere im Durchmesser, auf die äußeren Abmessungen des Einlassabschnitts des Kraftstoffinjektors abgestimmt. Der Anschlussstutzen weist einen auf den Außendurchmesser der Rohrleitung abgestimmten Innendurchmesser auf.

Bei der Rohrleitung handelt es sich um das Zwischenrohr bzw. Verbindungsrohr zwischen dem Kraftstoff-Hochdruckspeicherrohr (Common-Rail) und einer Injektoraufnahme eines Kraftstoffeinspritzsystems.

Die Injektoraufnahme wird fachterminologisch auch als Injektortasse und der Anschlussstutzen als Injektortassenhals bezeichnet.

Im Anschlussstutzen ist ein mit einer Durchgangsöffnung versehenes Lotstoppbauteil angeordnet. Das Anschlussende der Rohrleitung ist in den Anschlusssstutzen eingeführt und im Anschlussstutzen stoffschlüssig mittels einer Lötverbindung gefügt. Durch das Lotstoppbauteil lässt sich der Lotfluss bei der Herstellung der Lötverbindung prozesssicher geometrisch begrenzen.

Dem Lotstoppbauteil ist innerhalb des Anschlussstutzens auf der vom Injektorstutzen abgewandten Seite ein Lötmaterial vorgelagert. Vorzugsweise handelt es sich um einen Lotring, insbesondere einen Kupferlotring. Das Lotmaterial kann ringförmig oder zylindrisch ausgeführt sein. Weiterhin kann ein pastenförmiges Lötmaterial eingesetzt werden.

Das Lotmaterial verteilt sich im Lötprozess zwischen dem Anschlussende der Rohrleitung und dem Anschlussstutzen der Injektoraufnahme kapillarisch.

Nach dem Lötprozess ist eine optische Kontrolle möglich, ob sich das Lot vollständig verteilt hat.

Das Lotstoppbauteil ist im Anschlussstutzen kraftschlüssig, beispielsweise durch eine Presspassung, gefügt. Weiterhin kann das Lotstoppbauteil im Anschlussstutzen stoffschlüssig gefügt sein. Dies kann vorzugsweise mittels einer Laserschweißung mit einer sehr kurzen Fügedauer erfolgen.

Besonders vorteilhaft kann die Fügung des Lotstoppbauteils in Anschlussstutzen von der Seite des Injektorstutzens bzw. der Injektortasse her erfolgen.

Bevorzugt besteht das Lotstoppbauteil aus Edelstahl. Das Lotstoppbauteil kann durch einen Ring, eine Scheibe bzw. Lochscheibe oder auch eine Hülse gebildet sein. Zur Herstellung einer erfindungsgemäßen Verbindungsanordnung wird eine erfindungsgemäße tiefgezogene Injektoraufnahme bereitgestellt. In den Anschlussstutzen der Injektoraufnahme ist das Lotstoppbauteil als innere Begrenzung eingefügt. Das Lotstoppbauteil kann hierzu sowohl von unten, also vom Injektorstutzen her, als auch von oben, also vom Anschlussstutzen her in den Anschlussstutzen eingeführt und positioniert werden. Anschließend wird das Lotstoppbauteil gefügt. Dies erfolgt vorzugsweise stoffschlüssig mittels einer Schweißfügung oder mindestens kraftschlüssig mittels einer Pressung. Danach wird das Lotmaterial im Injektorstutzen appliziert. Hierzu kann ein Lotmaterialring oder auch eine Lotpaste von der Einführöffnung des Injektorstutzens in diesen eingeführt werden. Dann wird die Rohrleitung von oben in den Anschlussstutzen eingeschoben und stoffschlüssig gefügt, d. h. verlötet. Hierzu wird die Verbindungsanordnung in einem Lötofen auf eine Löttemperatur erwärmt. Im Fügebereich vorgesehenes Lotmaterial wird flüssig bzw. geschmolzen und eine thermische stoffschlüssige Fügung hergestellt.

Die Erfindung ist nachfolgend anhand eines in den Zeichnungen dargestellten Ausführungsbeispiels ergänzend beschrieben. Es zeigen:
- Figur 1: eine Draufsicht auf eine Verbindungsanordnung mit einer Injektoraufnahme und einer angeschlossenen Rohrleitung und
- Figur 2: einen vertikalen Querschnitt durch die Darstellung der Figur 1 entlang der Linie A - A.

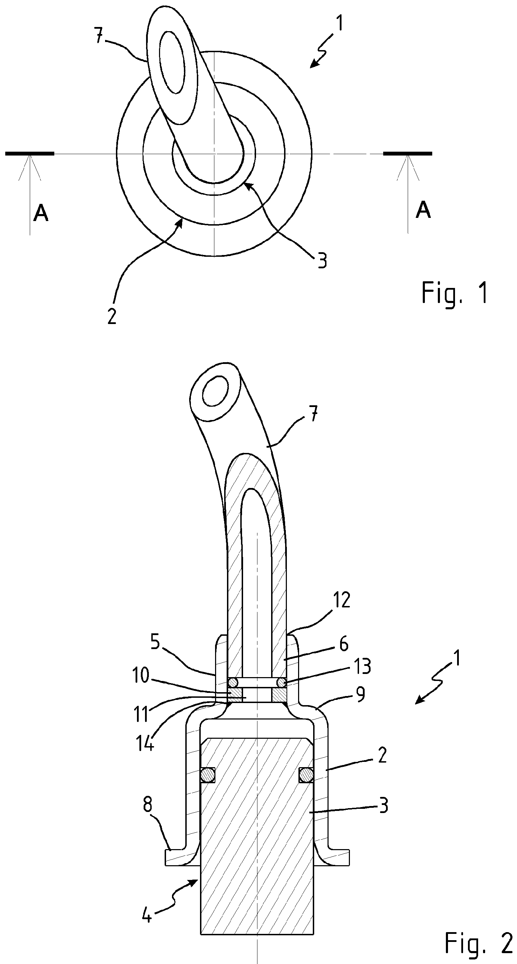

Anhand der Figuren 1 und 2 ist eine erfindungsgemäße Verbindungsanordnung eines Kraftstoffeinspritzsystems mit einer Injektoraufnahme beschrieben.

Bei der Injektoraufnahme 1 handelt es sich um ein Tiefziehteil, welches aus einem Blechzuschnitt aus Edelstahl hergestellt ist. Die Injektoraufnahme 1 weist einen Injektorstutzen 2 zur Aufnahme eines Einlassabschnitts 3 eines technisch vereinfacht dargestellen Kraftstoffinjektors 4 sowie einen Anschlussstutzen 5 zur Aufnahme eines Anschlussendes 6 einer Rohrleitung 7 auf. Die Rohrleitung 7 ist das Zwischenrohr zwischen einem hier nicht dargestellten Kraftstoff-Hochdruckspeicherrohr des Kraftstoffeinspritzsystems und der Injektoraufnahme 1.

Die Festlegung der Injektoraufnahme 1 an einem Zylinderkopf eines Verbrennungsmotors erfolgt in geeigneter grundsätzlich bekannter Weise. Zylinderkopfseitig weist die Injektoraufnahme 1 einen umlaufenden radial nach außen abstehenden Aufstandsflansch 8 auf.

Der Innendurchmesser des Injektorstutzens 2 ist größer als der Innendurchmesser des Anschlussstutzens 5. Über einen ringförmig umlaufenden Schulterabschnitt 9 geht der Injektorstutzen 2 in den Anschlussstutzen 5 über.

Im Anschlussstutzen 5 ist ein scheibenförmiges Lotstoppbauteil 10 angeordnet. Dieses weist eine Durchgangsöffnung 11 auf.

In Richtung zum Anschlussende 6 der Rohrleitung 7, also in Richtung zur Einführöffnung 12 des Anschlussstutzens 5 ist dem Lotstoppbauteil 10 ein Lotmaterial 13 vorgelagert. Vorzugsweise handelt es sich bei dem Lotmaterial 13 um einen Kupfer-Lotring.

Das Lotstoppbauteil 10 kann durch eine Lochscheibe, einen Ring oder auch eine Hülse gebildet sein. Der Außendurchmesser des Lotstoppbauteils 10 entspricht dem Innendurchmesser des Anschlussstutzens 5.

Die Festlegung des Lotstoppbauteils 10 im Anschlussstutzen 5 erfolgt bevorzugt mittels einer Schweißfügung 14, wie in der Figur 2 gedeutet, zu erkennen.

Der Außendurchmesser des Lotstoppbauteils 10 kann auch gegenüber dem Innendurchmesser des Anschlussstutzens 5 ein Übermaß aufweisen. In diesem Fall wird das Lotstoppbauteil 10 im Anschlussstutzen 5 mit einer Press- bzw. Übermaßpassung gefügt.

Vorzugsweise besteht das Lotstoppbauteil 10 aus Edelstahl.

Zur Herstellung der Verbindungsanordnung wird das Lotstoppbauteil 10 im Anschlussstutzen 5 positioniert und hier verschweißt. Anschließend wird das Lotmaterial 13 von oben über die Einführöffnung 12 des Anschlussstutzens 5 eingebracht. Danach wird das Anschlussende 6 der Rohrleitung 7 in den Anschlussstutzen 5 eingeschoben. Im Anschluss daran wird das gesamte Bauteil in einem Lötofen auf Löttemperatur erwärmt und das Anschlussende 6 der Rohrleitung 7 mit dem Anschlussstutzen 5 löttechnisch gefügt. Hierbei schmilzt das Lotmaterial 13 auf und stellt die stoffschlüssige Verbindung zwischen Innenwand des Anschlussstutzens 5 und der Außenwand des Anschlussendes 6 einschließlich der beteiligten Stirnflächen her. Das Lotstoppbauteil 10 bzw. Lotmaterial 13 dient zu Dichtigkeitszwecken und verhindert, dass Lotwerkstoff, insbesondere verwendetes Kupferlot, während des Lötprozesses in den Injektorstutzen 2 gelangt und dort möglicherweise Dichtflächen benetzt und das Bauteil unbrauchbar macht. Die prozesssichere und geometrische Begrenzung des Lotflusses wird unterstützt durch das Lotstoppbauteil 10, welche Lotfluss in den Injektorstutzen 2 verhindert. Auf diese Weise wird Lötbarkeit einer tiefgezogenen aus Edelstahl hergestellten Injektoraufnahme 1 mit der Rohrleitung 7 gewährleistet.

### Bezugszeichen:

- 1: - Injektoraufnahme
- 2: - Injektorstutzen
- 3: - Einlassabschnitt
- 4: - Kraftstoffinjektor
- 5: - Anschlussstutzen
- 6: - Anschlussende
- 7: - Rohrleitung
- 8: - Aufstandsflansch
- 9: - Schulterabschnitt
- 10: - Lotstoppbauteil
- 11: - Durchgangsöffnung in 9
- 12: - Einführöffnung von 5
- 13: - Lotmaterial
- 14: - Schweißfügung

## Patentansprüche

1. Injektoraufnahme, welche einen Injektorstutzen (2) zur Aufnahme eines Einlassabschnitts (3) eines Kraftstoffinjektors (4) und einen Anschlussstutzen (5) zur Aufnahme eines Anschlussendes (6) einer Rohrleitung (7) aufweist, **dadurch gekennzeichnet, dass** das Anschlussende (6) der Rohrleitung (7) im Anschlussstutzen (5) unter Verwendung eines Lotmaterials (13) stoffschlüssig mittels einer Lötverbindung gefügt ist und im Anschlussstutzen (5) ein mit einer Durchgangsöffnung (11) versehenes Lotstoppbauteil (10) angeordnet ist, welches den Lotfluss bei der Herstellung der Lötverbindung prozesssicher geometrisch begrenzt und einen Lotfluss in den Injektorstutzen verhindert.

2. Injektoraufnahme nach Anspruch 1, **dadurch gekennzeichnet, dass** dem Lotstoppbauteil (10) innerhalb des Anschlussstutzens (5) in Richtung zum Injektorstutzen (2) ein Lotmaterial (13) vorgelagert ist.

3. Injektoraufnahme nach Anspruch 1 oder 2, d a **durch gekennzeichnet**, dass das Lotstoppbauteil (10) im Anschlussstutzen (5) kraftschlüssig gefügt ist.

4. Injektoraufnahme nach einem der Ansprüche 1 bis 3, **dadurch gekennzeichnet, dass** das Lotstoppbauteil (10) im Anschlussstutzen (5) stoffschlüssig gefügt ist.

5. Injektoraufnahme nach einem der Ansprüche 1 bis 4, **dadurch gekennzeichnet, dass** sie ein Tiefziehteil ist.

6. Injektoraufnahme nach einem der Ansprüche 1 bis 5, **dadurch gekennzeichnet, dass** das Lotstoppbauteil (10) durch eine Lochscheibe, eine Hülse oder einen Ring gebildet ist.

7. Injektoraufnahme nach einem der Ansprüche 1 bis 6, **dadurch gekennzeichnet, dass** das Lotstoppbauteil (10) aus Edelstahl besteht.

8. Verbindungsanordnung eines Kraftstoffeinspritzsystems mit einer Injektoraufnahme (1) nach einem der Ansprüche 1 bis 7, **dadurch gekennzeichnet, dass** das Anschlussende (6) der Rohrleitung (7) in den Anschlussstutzen (5) eingeführt und im Anschlussstutzen (5) stoffschlüssig mittels einer Lötverbindung gefügt ist.

## Claims

1. Injector receiver, which has an injector nozzle (2) for receiving an inlet section (3) of a fuel injector (4) and a connecting nozzle (5) for receiving a connecting end (6) of a pipeline (7), **characterised in that** the connecting end (6) of the pipeline (7) is joined in the connecting nozzle (5) using a solder material (13) by material bonding by means of a solder connection and in the connecting nozzle (5) a solder stop component (10) provided with a through opening (11) is arranged which geometrically delimits the flow of solder when forming the solder connection in a process-secure manner and prevents a flow of solder into the injector nozzle.

2. Injector receiver according to claim 1, **characterised in that** a solder material (13) is arranged upstream of the solder stop component (10) inside the connecting nozzle (5) in the direction of the injector nozzle (2).

3. Injector receiver according to claim 1 or 2, **characterised in that** the solder stop component (10) is joined in the connecting nozzle (5) by force-fitting.

4. Injector receiver according to any of claims 1 to 3, **characterised in that** the solder stop component (10) is joined in the connecting nozzle (5) by material bonding.

5. Injector receiver according to any of claims 1 to 4, **characterised in that** it is a deep-drawn part.

6. Injector receiver according to any of claims 1 to 5, **characterised in that** the solder stop component (10) is formed by a perforated disc, a sleeve or a ring.

7. Injector receiver according to any of claims 1 to 6, **characterised in that** the solder stop component (10) is made of stainless steel.

8. Connection assembly of a fuel injection system with an injector receiver (1) according to any of claims 1 to 7, **characterised in that** the connection end (6) of the pipeline (7) is inserted into the connecting nozzle (5) and is joined in the connecting nozzle (5) by material bonding by means of a solder connection.

## Revendications

1. Prise d'injecteur, présentant un raccord d'injecteur (2) destiné à recevoir une section d'entrée (3) d'un injecteur de carburant (4) et un embout de raccordement (5) destiné à recevoir une extrémité de raccordement (6) d'une conduite (7), **caractérisée en ce que** l'extrémité de raccordement (6) de la conduite (7) est assemblée par liaison de matière au moyen d'un joint soudé dans l'embout de raccordement (5) en utilisant un matériau de soudure (13) et, dans l'embout de raccordement (5), est disposé un composant de butée de soudure (10) pourvu d'une ouverture de passage (11), lequel limite géométriquement de manière fiable l'écoulement de soudure lors de la réalisation du joint soudé et empêche un écoulement de soudure dans le raccord d'injecteur.

2. Prise d'injecteur selon la revendication 1, **caractérisée en ce qu'**un matériau de soudure (13) est disposé en amont du composant de butée de soudure (10) à l'intérieur de l'embout de raccordement (5) en direction du raccord d'injecteur (2).

3. Prise d'injecteur selon la revendication 1 ou 2, **caractérisée en ce que** le composant de butée de soudure (10) est assemblé par liaison de force dans l'embout de raccordement (5).

4. Prise d'injecteur selon l'une quelconque des revendications 1 à 3, **caractérisée en ce que** le composant de butée de soudure (10) est assemblé par liaison de matière dans l'embout de raccordement (5).

5. Prise d'injecteur selon l'une quelconque des revendications 1 à 4, **caractérisée en ce qu'**il s'agit d'une pièce emboutie.

6. Prise d'injecteur selon l'une quelconque des revendications 1 à 5, **caractérisée en ce que** le composant de butée de soudure (10) est formé par un disque perforé, une douille ou une bague.

7. Prise d'injecteur selon l'une quelconque des revendications 1 à 6, **caractérisée en ce que** le composant de butée de soudure (10) est en acier inoxydable.

8. Ensemble de raccordement d'un système d'injection de carburant avec une prise d'injecteur (1) selon l'une quelconque des revendications 1 à 7, **caractérisé en ce que** l'extrémité de raccordement (6) de la conduite (7) est insérée dans l'embout de raccordement (5) et assemblée par liaison de matière au moyen d'un joint soudé dans l'embout de raccordement (5).
